# EUROPÄISCHE PATENTSCHRIFT

(11) **EP 0 445 373 B1**
(45) Veröffentlichungstag und Bekanntmachung des Hinweises auf die Patenterteilung: **02.06.1993**
(21) Anmeldenummer: 90122460.0
(22) Anmeldetag: 26.11.1990
(51) Int. Cl.: B60N 3/02

(54) **Haltegriff für Kraftfahrzeuge**
Handgrip for motor vehicles
Poignée pour véhicules automobiles

(30) Priorität: 22.02.1990 DE 4005589
(43) Veröffentlichungstag der Anmeldung: 11.09.1991
(73) Patentinhaber: Dr.Ing.h.c. F. Porsche Aktiengesellschaft, 70435 Stuttgart (DE)
(72) Erfinder: Marchart, Horst, Dipl.-Ing. (FH), W-7000 Stuttgart 50 (DE)

(56) Entgegenhaltungen:
- DE-A- 2 900 056
- DE-B- 1 120 291
- DE-C- 883 407
- GB-A- 20 420
- US-A- 2 768 590
- US-A- 3 182 606
- US-A- 4 072 339
- PATENT ABSTRACTS OF JAPAN, Band 9, Nr. 60 (M-364)[1783], 16. März 1985; & JP-A-59 195 473 (HONDA GIKEN) 06-11-1984

## Beschreibung

Die Erfindung betrifft ein Kraftfahrzeug, insbesondere einen Personenwagen, mit einer Hintersitzanlage und einer innenliegenden B-Säule, die abschnittsweise von zwei aneinandergesetzten Sichtscheiben nach außen hin vollständig verkleidet ist.

Bei einem bekannten Kraftfahrzeug der eingangs genannten Gattung verläuft die B-Säule von der Gürtellinie bis zum obenliegenden seitlichen Dachrahmen parallel und mit Abstand zu den außenliegenden Sichtscheiben. Nachteilig an dieser Anordnung ist, daß an der B-Säule keine Vorkehrungen getroffen worden sind, damit sich die Insassen der Hintersitzanlage im Bedarfsfall festhalten können.

Aufgabe der Erfindung ist es, an einer B-Säule solche Vorkehrungen zu treffen, daß die obengenannten Nachteile vermieden werden.

Erfindungsgemäß wird diese Aufgabe durch die kennzeichnenden Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteil sind darin zu sehen, daß durch die bereichsweise Ausbildung der B-Säule als Haltegriff eine im Aufbau einfache und kostengünstige Haltemöglichkeit für die Insassen der Hintersitzanlage geschaffen wird. Eine nachträgliche Montage und zusätzliche Befestigungsmittel für den Haltegriff sind nicht erforderlich.

Gemäß einer ersten Ausführungsform wird der Haltegriff durch einen nach innen gerichteten bogenförmigen Abschnitt der B-Säule gebildet, wobei der Abschnitt mit Abstand zu den außenliegenden Sichtscheiben verläuft. Bei einer zweiten Ausführungsform ist vorgesehen, daß der Haltegriff durch eine bügelartige Anformung an der B-Säule gebildet wird.

Ein Ausführungsbeispiel der Erfindung ist in der Zeichnung dargestellt und wird im folgenden näher erläutert.

Es zeigt:
- Fig. 1: eine Teilseitenansicht eines Kraftfahrzeuges mit einer B-Säule und einem Haltegriff,
- Fig. 2: einen Schnitt nach der Linie II-II der Fig. 1 in größerem Maßstab,

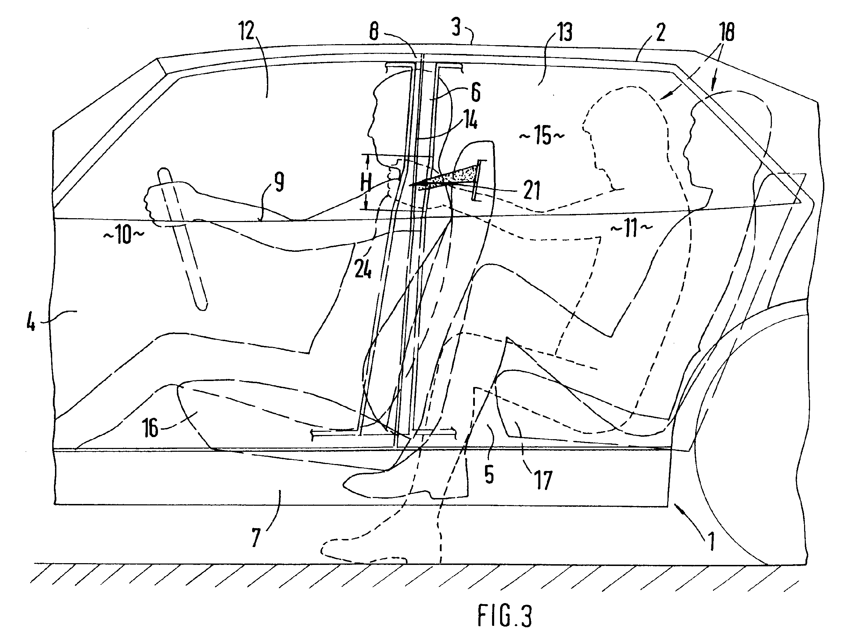

- Fig. 3: eine Ansicht entsprechend Fig. 1 mit einer weiteren Ausführungsform eines Haltegriffs,
- Fig. 4: eine perspektifische Ansicht des Haltegriffs entsprechend Fig. 3 in großem Maßstab.

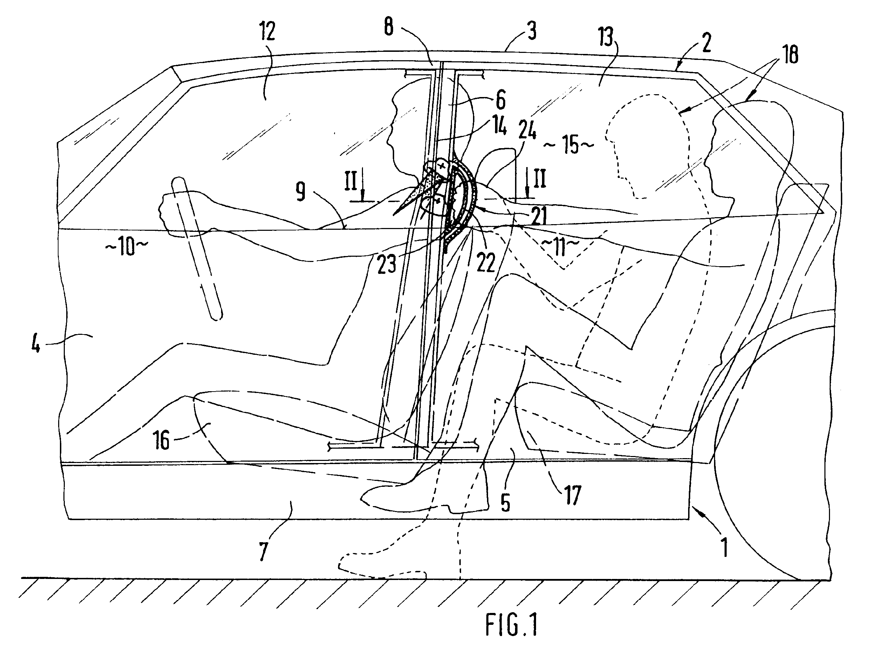

Der in Fig. 1 gezeigte Personenwagen 1 weist im dargestellten Bereich einen Aufbau 2 auf, der sich aus einem Dach 3, einer vorderen Tür 4 und einer hinteren Tür 5 zusammensetzt. Zwischen den beiden Türen 4, 5 erstreckt sich eine aufrecht verlaufende B-Säule 6, die einerseits mit einem untenliegenden Fahrzeuglängsträger 7 (Schweller) und andererseits mit einem seitlichen Dachrahmen 8 fest verbunden ist.

Jede Tür 4, 5 besteht aus einem, sich etwa bis in Höhe einer Gürtellinie 9 erstreckenden Türkörper 10, 11 und einer höhenverstellbaren Sichtscheibe 12, 13, wobei die beiden Sichtscheiben 12, 13 oberhalb der Gürtellinie 9 rahmenlos ausgebildet sind.

Die beiden Sichtscheiben 12, 13 sind - in Fahrzeuglängsrichtung gesehen - unter Bildung einer Fuge 14 aneinandergesetzt und decken die innenliegende B-Säule (6) vollständig ab.

Durch die Türen 4, 5 ist ein Fahrgastraum 15 zugänglich, der vordere Sitze 16 und eine Hintersitzanlage 17 für Fahrzeuginsassen 18 aufweist. Die aus zwei Hutprofilen 19, 20 zusammengesetzte, einen kastenförmigen Hohlträger bildende B-Säule 6 verjüngt sich von unten nach oben hin kontinuierlich und ist bereichsweise als Haltegriff 21 für die Fahrzeuginsassen 18 der Hintersitzanlage 17 ausgebildet.

Gemäß einer ersten Ausführungsform wird der Haltegriff 21 durch eine bügelartige Anformung 22 der B-Säule 6 gebildet. Die Anformung 22 ist auf der der Hintersitzanlage 17 zugekehrten Seite der B-Säule 6 angeordnet und in Fahrzeuglängsrichtung ausgerichtet. Entsprechend Fig. 1 ist zwischen der B-Säule 6 und der Anformung 22 eine sichelförmige Öffnung 23 zum Hindurchführen einer Hand 24 eines Insassen 18 der Hintersitzanlage 17 vorgesehen.

Die Anformung 22 verläuft mit seitlichem Abstand A zur außenliegenden Sichtscheibe 13. Die Anformung 22 kann entweder einstückig mit der B-Säule 6 ausgebildet sein oder aber durch ein separates Teil gebildet werden, das fest mit der B-Säule verbunden ist.

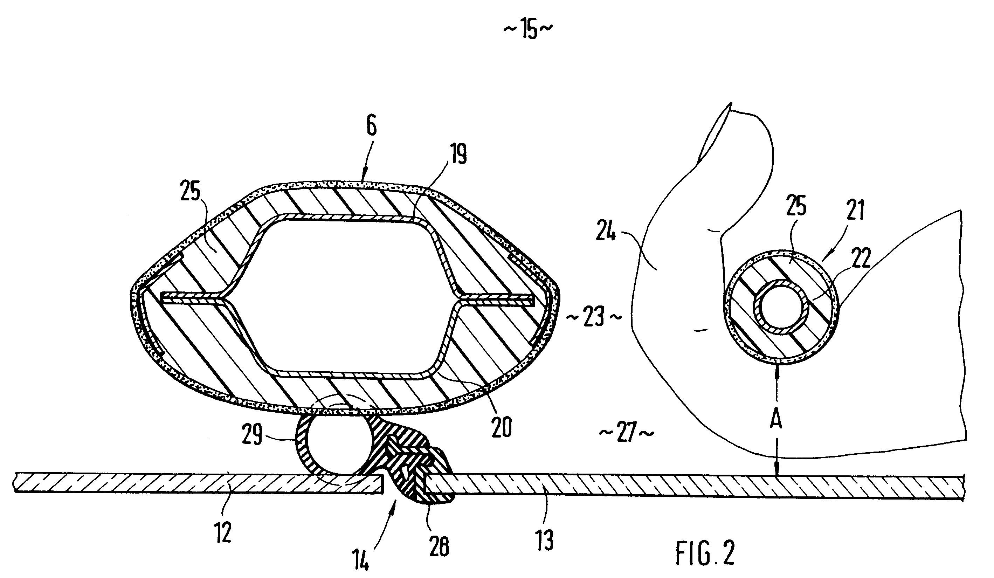

Die B-Säule 6 und die Anformung 22 können mit einer Verkleidung 25 versehen sein, die beispielsweise durch eine Umhüllung aus energieaufnehmenden Schaum und/oder eine Bezugsschicht aus Kunststoff oder Leder gebildet wird (Fig. 2).

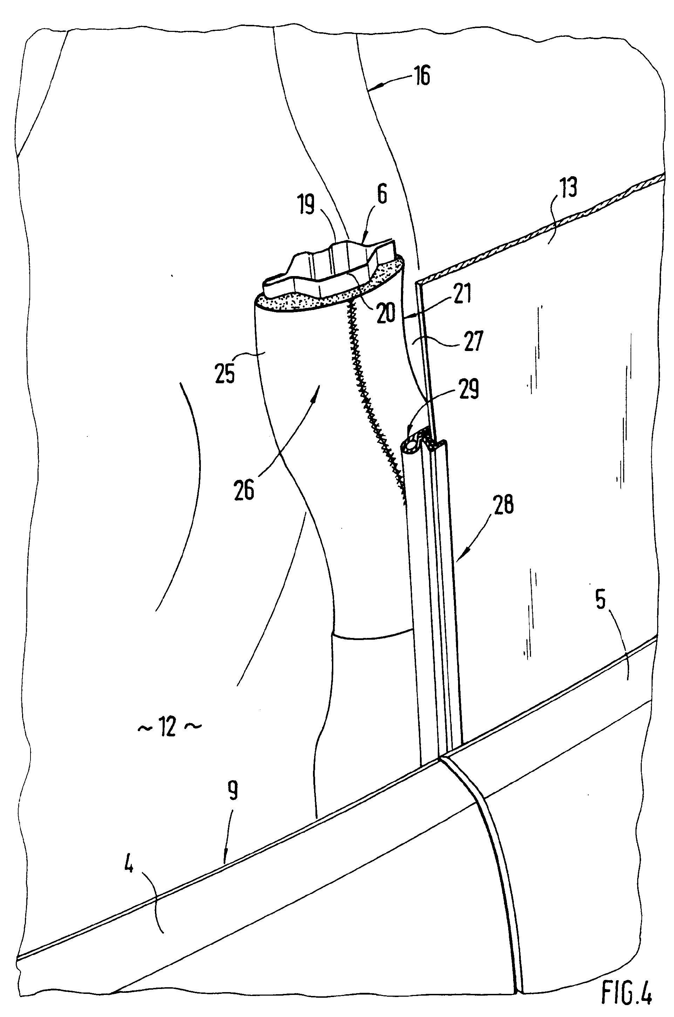

Gemäß einer zweiten Ausführungsform (Fig. 4) wird der Haltegriff 21 durch einen nach innen gerichteten bogenförmigen Abschnitt 26 der B-Säule 6 gebildet, dergestalt, daß örtlich zwischen den außenliegenden Sichtscheiben 12, 13 und der nach innen gezogenen B-Säule 6 ein Raum 27 zum Hindurchführen der Hand 24 eines Fahrzeuginsassen 18 der Hintersitzanlage 17 vorhanden ist. Die Höhe H des bogenförmigen Abschnitts 26 richtet sich nach der Breite des Handrückens des Fahrzeuginsassen 18.

Beide Ausführungsformen des Haltegriffes 21 sind etwa oberhalb bzw. benachbart der Gürtellinie 9 angeordnet. Es besteht auch die Möglichkeit, daß die hintere Sichtscheibe 13 durch eine feststehende Fondseitenscheibe des Personenwagens 1 gebildet wird, die die innenliegende B-Säule 6 abschnittsweise verkleidet.

Entsprechend Fig. 4 erfolgt die Abdichtung zwischen den beiden angrenzenden Sichtscheiben 12, 13 durch einen auf die hintere Sichtscheibe 13 aufgesteckten Dichtkörper 28, der die vordere Sichtscheibe 12 überragt und mit einem schlauchförmigen Profil 29 von innen gegen die vordere Sichtscheibe 12 drückt.

## Patentansprüche

1. Kraftfahrzeug, insbesondere Personenwagen mit einer Hintersitzanlage (17) und einer innenliegenden B-Säule (6), die abschnittsweise von zwei in Fahrzeuglängsrichtung gesehen aneinandergesetzten Sichtscheiben (12,13) nach außen hin verkleidet ist, dadurch gekennzeichnet, daß die B-Säule (6) bereichsweise als Haltegriff (21) für die Insassen (18) der Hintersitzanlage (17) ausgebildet ist.

2. Kraftfahrzeug nach Anspruch 1, dadurch gekennzeichnet, daß der Haltegriff (21) durch eine bügelartige Anformung (22) der B-Säule (6) gebildet wird, die auf der der Hintersitzanlage (17) zugekehrten Seite der B-Säule (6) angebracht ist.

3. Kraftfahrzeug nach Anspruch 2, dadurch gekennzeichnet, daß die Anformung (22) in Fahrzeuglängsrichtung verläuft und die B-Säule (6) in Richtung Hintersitzanlage (17) überragt.

4. Kraftfahrzeug nach Anspruch 2, dadurch gekennzeichnet, daß zwischen der B-Säule (6) und der Anformung (22) eine sichelförmige Öffnung (23) zum Hindurchführen einer Hand (24) eines Insassen (18) der Hintersitzanlage (17) vorgesehen ist.

5. Kraftfahrzeug nach Anspruch 2, dadurch gekennzeichnet, daß die Anformung (22) mit seitlichem Abstand A zur außenliegenden Sichtscheibe (13) verläuft.

6. Kraftfahrzeug nach Anspruch 1, dadurch gekennzeichnet, daß die B-Säule (6) örtlich einen - in Fahrzeugquerrichtung gesehen - nach innen gerichteten bogenförmigen Abschnitt (26) aufweist, der den Haltegriff (21) bildet.

7. Kraftfahrzeug nach Anspruch 6, dadurch gekennzeichnet, daß der bogenförmige Abschnitt (26) so weit nach innen gezogen ist, daß eine Hand (24) eines Insassen (18) der Hintersitzanlage (17) zwischen der B-Säule (6) und den außenliegenden Sichtscheiben (12, 13) hindurchführbar ist.

8. Kraftfahrzeug nach Anspruch 1, dadurch gekennzeichnet, daß der an der B-Säule (6) ausgebildete Haltegriff (21) oberhalb bzw. benachbart einer Gürtellinie (9) angeordnet ist.

## Claims

1. A motor vehicle, in particular a passenger car with a rear-seat arrangement (17) and an internal B-column (6) partly covered on the outside by two contiguous windows (12, 13) as viewed in the longitudinal direction of the vehicle, **characterized in** **that** the B-column (6) is formed in part as a handle (21) for the passengers (18) of the rear seat arrangement (17).

2. A motor vehicle according to Claim 1, **characterized in that** the handle (21) is formed by a yoke-shaped moulded attachment (22) on the B-column (6), which is attached to the side of the B-column (6) facing the rear-seat arrangement (17).

3. A motor vehicle according to Claim 2, **characterized in that** the moulded attachment (22) extends in the longitudinal direction of the vehicle and projects beyond the B-column (6) in the direction of the rear-seat arrangement (17).

4. A motor vehicle according to Claim 2, **characterized in that** a sickle-shaped opening (23) is provided between the B-column (6) and the moulded attachment (22) for a passenger (18) on the rear-seat arrangement (17) to insert a hand (24).

5. A motor vehicle according to Claim 2, **characterized in that** the moulded attachment (22) extends at a lateral distance **A** from the outside window (13).

6. A motor vehicle according to Claim 1, **characterized in that** the B-column (6) is provided locally with a curved portion (26) orientated inwards - as viewed in the transverse direction of the vehicle - and forming the handle (21).

7. A motor vehicle according to Claim 6, **characterized in that** the curved portion (26) extends so far inwards that a passenger (18) on the rear-seat arrangement (17) can insert his hand (24) through between the B-column (6) and the outside windows (12, 13).

8. A motor vehicle according to Claim 1, **characterized in that** the handle (21) formed on the B-column (6) is arranged above or adjacent to a waist line (9).

## Revendications

1. Véhicule automobile, en particulier voiture de tourisme comportant un banquette arrière (17) et un montant B (6) intérieur, qui est revêtu de l'extérieur, par parties, par deux vitres (12, 13) opposées l'une à l'autre, vues dans la direction longitudinale du véhicule, caractérisé en ce que le montant B (6) est conçu dans une zone comme une poignée (21) pour les passagers (18) de la banquette arrière (17).

2. Véhicule automobile selon la revendication 1, caractérisé en ce que la poignée (21) est constituée par un étrier (22) formé sur le montant B (6), qui est placé sur le côté tourné vers la banquette arrière (17) du montant B (6).

3. Véhicule automobile selon la revendication 2, caractérisé en ce que l'étrier (22) s'étend dans la direction longitudinale du véhicule et fait saillie du montant B (6) en direction de la banquette arrière (17).

4. Véhicule automobile selon la revendication 2, caractérisé en ce qu'il est prévu, entre le montant B (6) et l'étrier (22), une ouverture (23) en forme de croissant pour qu'un passager (18) de la banquette arrière (17) puisse passer la main (24).

5. Véhicule automobile selon la revendication 2, caractérisé en ce que l'étrier (22) se trouve à une distance latérale (A) de la vitre (13) extérieure.

6. Véhicule automobile selon la revendication 1, caractérisé en ce que le montant B (6) présente localement une partie (26) en forme d'arc dirigée vers l'intérieur - dans la direction transversale du véhicule - qui forme la poignée (21).

7. Véhicule automobile selon la revendication 6, caractérisé en ce que la partie en arc (26) est suffisamment en retrait vers l'intérieur pour qu'un passager (18) de la banquette arrière (17) puisse passer la main (24) entre le montant B (6) et les vitres extérieures (12, 13).

8. Véhicule automobile selon la revendication 1, caractérisé en ce que la poignée (21), formée sur le montant B (6), se situe au-dessus ou à proximité d'une ligne médiane (9).
